# EUROPEAN PATENT SPECIFICATION

(11) **EP 2 974 914 B1**
(45) Date of publication and mention of the grant of the patent: **13.03.2019**
(21) Application number: 15176989.0
(22) Date of filing: 16.07.2015
(51) Int. Cl.: B60S 1/24

(54) **BEARING PREVENTING OVERLOADING, ESPECIALLY IN THE WINDSHIELD WIPER MECHANISM OF AUTOMOBILES, AND AUTOMOBILE WINDSHIELD WIPING MECHANISM CONTAINING SUCH A BEARING**
LAGER ZUR VERHINDERUNG VON ÜBERLASTUNG, INSBESONDERE IN EINEM SCHEIBENWISCHERMECHANISMUS VON AUTOMOBILEN, UND SCHEIBENWISCHERMECHANISMUS MIT SOLCH EINEM LAGER
PALIER EMPÊCHANT LA SURCHARGE, EN PARTICULIER DANS LE MÉCANISME D'ESSUIE-GLACE DE PARE-BRISE D'AUTOMOBILES, ET UN TEL MÉCANISME CONTENANT LEDIT PALIER

(30) Priority: 18.07.2014 PL 40891814
(43) Date of publication of application: 20.01.2016
(73) Proprietor: Valeo Autosystemy SP. Z.O.O., 32-050 Skawina (PL)
(72) Inventor: ORZEL, Wojciech, 32-050 SKAWINA (PL)
(74) Representative: Callu-Danseux, Violaine

(56) References cited:
- DE-A1- 3 440 044
- DE-A1- 10 233 489
- DE-A1- 19 932 789
- DE-A1-102009 003 189
- FR-A- 1 364 818

## Description

The subject matter of the invention is a bearing, especially for the windshield wiper mechanism of automobiles, which prevents overloading, especially that which occurs in the windshield wiper mechanism caused by blockage of the wiper blades by excessive snow, for example.

In typical automobile windshield wiper mechanisms known in the prior art, the arms of the wipers are fastened to the so-called shaft (axis). The shaft, rotating through a certain angle alternately in opposite directions, causes the wiper arms to move across the window pane of the automobile, and then the arm returns to the starting position. Windshield wiper systems are driven by electric motors. The electric motor, through a system of appropriate internal mechanisms, comprising a drive shaft, an arm of the motor connected rotationally to a link rod, and so forth, drives two or more shafts (axes) to which the wipers are fastened.

In the event that the motion of the wipers is blocked, such as by excessive compacted and shovelled snow, overloading occurs in the system.

From application EP2123523 there is known a solution in which the pivot rotationally connecting the motor crank to the link rod is fastened in an oblong hole in the motor crank in such a way that it is held in the working position by a spring, and under the influence of a force greater than the elastic force of the spring it can be displaced along the hole, thereby enabling rotation of the arm even when the wipers are blocked.

A similar solution was disclosed in application DE102009003189, in which the rotation of the arm is ensured by an oblong hole in the link rod in which the bearing of the pivot is movably fastened. The bearing is held in the working position by a spring, and under the action of a force greater than the elastic force of the spring it can be moved along the link rod. In an advantageous exemplary embodiment, the spring is integrated with the bearing. The drawback of this solution is the movement of the bearing during the overloading, which makes it necessary to take into account the friction force and in certain instances it can result in self-locking, which in turn causes a lack of the expected function.

Use of the known solutions is anticipated only in theoretical instances when the overloading has a direction consonant with the movement of the bearing, which is not achievable in practice, due to the natural variability of the components. Another technical imperfection is the need to install and secure an elastic element compressed by a force often >1 kN, which requires additional protection against slippage of the spring and also in the case of the wiper mechanisms requires the securing of a piece of the link rod against which the spring thrusts so that the force in the spring does not deform it.

The goal of the invention is to provide an alternative method of solving the problem of overloading that does not have the drawbacks of the known solutions.

The essence of the invention is a bearing preventing overloading, especially for the windshield wiper mechanism of automobiles, in which at least one wiper is driven by a motor by means of a system comprising a motor crank and a link rod pivotally connected thereto by a pivot mounted in the bearing which is fastened in a hole at one end portion of the link rod, characterized in that the bearing is fixedly mounted in the hole, wherein the axis of rotation of the pivot is defined by the bearing and the stiffness of the bearing is asymmetrical with respect to the so-defined axis of rotation of the pivot in the bearing.

The bearing has different stiffness in the direction of the greatest load than in other directions.

The bearing has a reduced stiffness at the side of the greatest load in the direction of the longitudinal link rod, allowing for deformation of the bearing under load, causing movement of the axis of the pivot relative to the edge of the hole.

The reduced stiffness is implemented by a recess between the part of the bearing supporting the pivot and the edge of the hole.

Advantageously, the bearing has an increased stiffness in the direction opposite to the direction of the greatest load.

Advantageously, the increased stiffness is implemented by a rigid element disposed between the part of the bearing supporting the pivot and the edge of the hole.

The essence of the invention is likewise a windshield wiper mechanism of automobiles comprising the above-described bearing.

Since in the invention the movement of the pivot axis is achieved not through displacement of the bearing, but by its deformation, the force acting through the bearing on the pivot is not dependent on the friction between the bearing and the link rod, and therefore it is more predictable.

Furthermore, in the known solutions of the prior art which utilize a movable bearing it is necessary to form a support for the elastic element on the link rod, which prevents the unwanted displacement thereof. In the case of the proposed solution, in which the bearing is seated immovably in the link rod, no such element is needed.

The invention also solves the problem of predictability of action of the bearings known from the prior art in cases when the direction of the force overloading the system coincides with the direction of movement of the bearing.

The invention will now be presented in advantageous exemplary embodiments, with reference to the enclosed figures, in which:
Fig. 1 and Fig. 2 show the bearing fastened in the link rod in an isometric projection,
Fig. 3 shows another exemplary embodiment of the bearing in a lateral projection.

### Advantageous exemplary embodiments of the invention

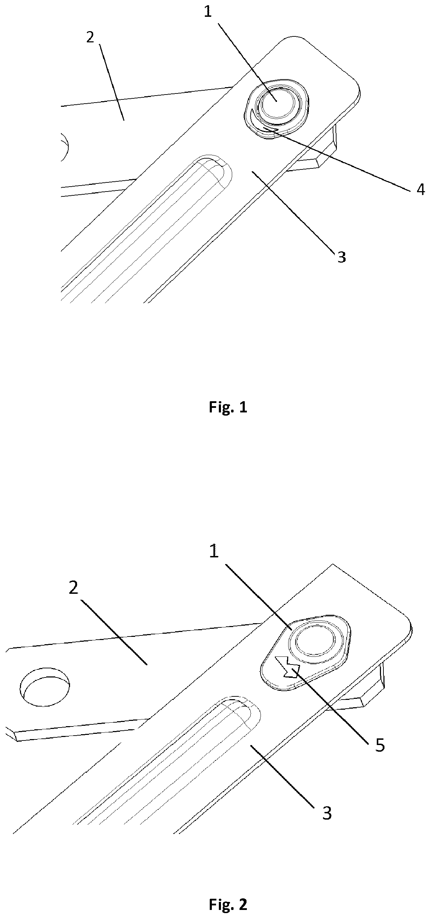

In the advantageous exemplary embodiment of the invention shown in Fig. 1, the bearing is an element of the windshield wiper mechanism of automobiles in which two wipers are driven by a motor by means of a system containing a motor crank 2 and a link rod 3 rotationally connected to it by means of a pivot 6. The pivot 6 is mounted in the bearing 1, which is immovably fastened in a hole at one of the end parts of the link rod 3. From the side of greatest loading, the bearing 1 has a reduction in stiffness allowing the bearing 1 to be deformed under the influence of loading, causing a displacement of the pivot axis 6 relative to the edge of the hole. This reduction is realized by a recess 4 between the part of the bearing 1 supporting the pivot 6 and the edge of the hole.

In another exemplary unclaimed embodiment, shown in Fig. 2, the reduction in stiffness is achieved by an elastic element 5 disposed between the part of the bearing 1 supporting the pivot 6 and the edge of the hole.

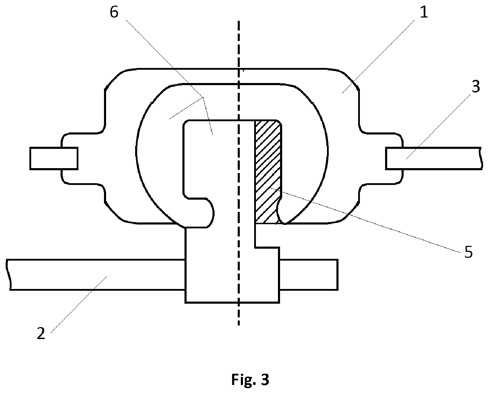

Asymmetry of stiffness can be achieved also inside the pivot 6, which is presented in the exemplary unclaimed embodiment shown in Fig. 3. The pivot 6, rotationally connecting the motor crank 2 and the link rod 3, is mounted in the bearing 1, immovably fastened in the hole on one of the end pieces of the link rod 3. Inside the pivot 6, on the side of greatest loading, between the cylindrical part and the spherical part of the pivot 6, is arranged an elastic element 5, which enables the displacement of the pivot axis 6 relative to the edge of the hole in which the bearing 1 is secured, which is key to accomplishing the goal of the invention.

## Claims

1. A bearing, especially for a windshield wiper system in which at least one wiper is driven by a motor by means of a system comprising a motor crank and a link rod rotationally connected thereto by a pivot mounted in the bearing, which is fastened in a hole at one end portion of the link rod, said bearing (1) is fixedly mounted in the hole, wherein the axis of rotation of said pivot (6) is defined by said bearing (1), the stiffness of said bearing (1) is asymmetric with respect to the so-defined axis of rotation of the pivot (6) in the bearing (1), its stiffness in the direction of the greatest load is different than in other directions, the bearing has a reduced stiffness in the longitudinal direction of the link rod (3), allowing for deformation of the bearing under load, causing movement of the axis of the pivot relative to the edge of the hole **characterized in that** the reduced stiffness is implemented by a recess (4) between the part of the bearing (1) supporting the pivot (6) and the edge of the hole.

2. The bearing according to claim 1, **characterized in that** the bearing has an increased stiffness in the direction opposite to the direction of the greatest load.

3. The bearing according to claim 2, **characterized in that** the increased stiffness is implemented by a rigid element disposed between the part of the bearing (1) supporting the pivot (6) and the edge of the hole.

4. Windshield wiper mechanism comprising the bearing according to any of claims 1-3.

## Patentansprüche

1. Lager, insbesondere für ein Windschutzscheibenwischersystem, in dem mindestens ein Wischer von einem Motor mittels eines Systems angetrieben wird, das eine Motorkurbel und eine Verbindungsstange umfasst, die durch einen in dem Lager, welches in einem Loch an einem Endabschnitt der Verbindungsstange befestigt ist, montierten Zapfen drehend damit verbunden ist, wobei das Lager (1) starr in dem Loch montiert ist, wobei die Drehachse des Zapfens (6) durch das Lager (1) definiert ist, wobei die Steifigkeit des Lagers (1) in Bezug auf die so definierte Drehachse des Zapfens (6) in dem Lager (1) asymmetrisch ist, wobei seine Steifigkeit in der Richtung der größten Last anders als in anderen Richtungen ist und das Lager in der Längsrichtung der Verbindungsstange (3) eine reduzierte Steifigkeit hat, die eine Verformung des Lagers unter Last gestattet, was eine Bewegung der Achse des Zapfens relativ zu der Kante des Lochs verursacht, **dadurch gekennzeichnet, dass** die reduzierte Steifigkeit durch eine Vertiefung (4) zwischen dem Teil des Lagers (1), der den Zapfen (6) stützt, und der Kante des Lochs implementiert ist.

2. Lager nach Anspruch 1, **dadurch gekennzeichnet, dass** das Lager in der Richtung, welche der Richtung der größten Last gegenüberliegt, eine erhöhte Steifigkeit hat.

3. Lager nach Anspruch 2, **dadurch gekennzeichnet, dass** die erhöhte Steifigkeit durch ein starres Element implementiert ist, das sich zwischen dem Teil des Lagers (1), der den Zapfen (6) stützt, und der Kante des Lochs erstreckt.

4. Windschutzscheibenwischermechanismus, der das Lager nach einem der Ansprüche 1-3 umfasst.

## Revendications

1. Palier, en particulier pour un système d'essuie-glace de pare-brise dans lequel au moins un essuie-glace est entraîné par un moteur au moyen d'un système comprenant une manivelle de moteur et une tige de liaison reliée de façon rotative à celle-ci par un pivot monté dans le palier, qui est fixé dans un trou au niveau d'une partie d'extrémité de la tige de liaison, ledit palier (1) étant monté fixement dans le trou, l'axe de rotation dudit pivot (6) étant défini par ledit palier (1), la rigidité dudit palier (1) étant asymétrique par rapport à l'axe de rotation du pivot (6) dans le palier (1), sa rigidité dans la direction de la plus grande charge étant différente de celle dans d'autres directions, le palier ayant une rigidité réduite dans la direction longitudinale de la tige de liaison (3), permettant la déformation du palier sous la charge, entraînant le mouvement de l'axe du pivot par rapport au bord du trou **caractérisé en ce que** la rigidité réduite est mise en oeuvre par un retrait (4) entre la partie du palier (1) supportant le pivot (6) et le bord du trou.

2. Palier selon la revendication 1, **caractérisé en ce que** le palier a une rigidité accrue dans la direction opposée à la direction de la plus grande charge.

3. Palier selon la revendication 2, **caractérisé en ce que** la rigidité accrue est mise en oeuvre par un élément rigide disposé entre la partie du palier (1) supportant le pivot (6) et le bord du trou.

4. Mécanisme d'essuie-glace de pare-brise comprenant le palier selon l'une quelconque des revendications 1 à 3.
